# EUROPEAN PATENT APPLICATION

(11) **EP 4 660 943 A1**
(43) Date of publication of application: **10.12.2025**
(21) Application number: 23920323.5
(22) Date of filing: 06.02.2023
(51) Int. Cl.: G06T 7/246

(54) **METHOD FOR MEASURING MOTION VELOCITY, AND DEVICE AND COMPUTER-READABLE STORAGE MEDIUM**

(71) Applicant: Shenzhen Yinwang Intelligent Technologies Co., Ltd., Shenzhen, Guangdong 518110 (CN)
(72) Inventor: ZHANG, Jinxin, Shenzhen, Guangdong 518129 (CN); LI, Ya, Shenzhen, Guangdong 518129 (CN); WANG, Yaming, Shenzhen, Guangdong 518129 (CN)
(74) Representative: Pfenning, Meinig & Partner mbB
(86) International application number: PCT/CN2023/074546
(87) International publication number: WO 2024/164108

(57) **Abstract**

This application discloses a movement velocity measurement method, a computing device, and a computer-readable storage medium. The method includes: obtaining a movement feature and N shot images of a first object, where the N shot images are N consecutive frames of images shot by the first object, and N is an integer greater than 1; inputting the N shot images into a first neural network, to obtain N first images and M second images, where each first image corresponds to a feature of one shot image, the M second images include a same target object, and M is an integer greater than 1 and less than or equal to N; and inputting the movement feature, the N first images, and the M second images into a second neural network, to obtain a velocity of the target object. In this application, a location and coordinate information of the target object no longer need to be inferred, and computing resource usage is low. This improves efficiency of a velocity measurement process. In addition, the velocity of the target object is directly obtained based on the images shot by the first object and the accurate movement feature of the first object. This improves accuracy of a velocity measurement result.

## Description

### TECHNICAL FIELD

Embodiments of this application relate to the field of artificial intelligence, and in particular, to a movement velocity measurement method, a device, and a computer-readable storage medium.

### BACKGROUND

In a process of an autonomous driving task, velocity calculation of target objects including a vehicle, a pedestrian, and the like has always been a difficult problem of great concern. Accurate estimation of a velocity of a target object may assist in calculating a moving track of the target object, to predict a behavior intention of the target object in a future period of time, so that an autonomous driving vehicle can make a more appropriate driving decision, and plan more secure and more efficient vehicle movement behavior.

In a camera-based pure visual solution, to measure the velocity of the target object, a location of the target object is first measured, and then a lateral velocity, a longitudinal velocity, and a velocity included angle of the target object are obtained based on a distance change. For the location of the target object, a location of the target object in a world coordinate system may be obtained through regression via a neural network, or the location of the target object may be calculated by using a conventional geometric method.

However, when the location of the target object is measured by using a pure visual method, a specific deviation exists. Then, a velocity of the target object obtained through calculation based on the deviation location is less accurate, and it is difficult to meet an actual application requirement.

### SUMMARY

This application provides a movement velocity measurement method, a computing device, and a computer-readable storage medium, to improve accuracy of measuring a movement velocity of a target object.

According to a first aspect, this application provides a movement velocity measurement method. A first object has an image shooting function, and may shoot a scene within an image shooting visual range of the first object, to obtain N shot images, where N is an integer greater than 1. The N shot images are N consecutive frames of images shot by the first object. For example, N consecutive frames of images shot by the first object within a time period may be used as the N shot images in this application, or if the first object shoots a video within a time period, N consecutive frames of images included in the video may also be used as the N shot images in this application.

The first object in this application may be in a stationary state or a moving state, or may be switched between a stationary state and a moving state, and the N shot images are not limited to being shot by the first object in the stationary state or the moving state. A movement feature of the first object indicates a feature and a change of the moving state of the first object within the time period in which the first object shoots the N shot images. For example, the movement feature of the first object includes but is not limited to a pose, coordinates, a velocity, or the like of the first object.

The N shot images are input into a first neural network, to obtain N first images and M second images. Each first image corresponds to a feature of one shot image, the M second images include a same target object, and M is an integer greater than 1 and less than or equal to N. In this application, shot images in which the same target object is shot need to be identified and screened out from the N shot images, to obtain the M second images. In other words, the M second images all are images in which the same target object is shot. Therefore, features of the target object in different frames of images may be learned based on the M second images.

In the image shooting visual range of the first object, there may be a plurality of target objects on which velocity measurement is to be performed. However, the movement velocity measurement method in this application is applicable to velocity measurement on one or more target objects at the same time. In a scenario in which velocities of a plurality of target objects are measured, for each target object, a second image in which the target object is shot needs to be obtained, and the second image of the target object is used for a subsequent velocity measurement procedure. For ease of description, in this application, an example in which only a velocity of one target object is measured is used for description.

The movement feature, the N first images, and the M second images are input into a second neural network, to obtain the velocity of the target object.

In this application, a location and coordinate information of the target object no longer need to be inferred, and computing resource usage is low. This improves efficiency of a velocity measurement process. In addition, the velocity of the target object is directly obtained based on the images shot by the first object and the accurate movement feature of the first object. This improves accuracy of a velocity measurement result.

Based on the first aspect, in an optional implementation, the first neural network includes a first subnet. After the N corresponding first images are generated based on the N shot images, the N first images are used as an input of the first subnet, and the first subnet identifies the N first images, to identify an object that is in each first image and on which velocity measurement is to be performed, so as to obtain the N identified images. In this case, in the obtained N identified images, a same target object is identified in M identified images, and the M identified images in which the same target object is identified are the M second images corresponding to the target object in this application. In other words, the M second images are identified images that are in the N identified images and in which the target object is identified.

On the basis of the first aspect, in an optional implementation, the first neural network includes a second subnet. After the N shot images are input into the first neural network, feature extraction is first performed on the N shot images by using the second subnet, to obtain the N first images. Each first image corresponds to the feature of one shot image.

On the basis of the first aspect, in an optional implementation, when the movement feature, the N first images, and the M second images are input into the second neural network, shielding processing may be first performed on image information other than the target object in the second image, to obtain a second image obtained through shielding processing. This reduces interference of other redundant information (for example, a background street, a street lamp, or a building) in the second image, and improves the efficiency of the velocity measurement process and the accuracy of the velocity measurement result.

On the basis of the first aspect, in an optional implementation, because the N shot images are N consecutive frames of images from different timestamps, for ease of subsequent processing, the movement feature of the first object may be first encoded into N movement feature images with different timestamps, timestamps of the N shot images are the same as the timestamps of the N movement feature images, and a timestamp of each movement feature image corresponds to a timestamp of one shot image.

According to a second aspect, this application provides a velocity measurement apparatus. The velocity measurement apparatus includes:
an obtaining unit, configured to obtain a movement feature and N shot images of a first object, where the N shot images are N consecutive frames of images shot by the first object, and N is an integer greater than 1; and
a processing unit, configured to input the N shot images into a first neural network, to obtain N first images and M second images, where each first image corresponds to a feature of one shot image, the M second images include a same target object, and M is an integer greater than 1 and less than or equal to N.

The processing unit is further configured to input the movement feature, the N first images, and the M second images into a second neural network, to obtain a velocity of the target object.

On the basis of the second aspect, in an optional implementation, the first neural network includes a first subnet, the first subnet is configured to identify the N first images to obtain the N identified images, and the M second images are identified images that are in the N identified images and in which the target object is identified.

On the basis of the second aspect, in an optional implementation, the first neural network further includes a second subnet, and the second subnet is configured to perform feature extraction on the N shot images to obtain the N first images.

On the basis of the second aspect, in an optional implementation, before the movement feature, the N first images, and the M second images are input into the second neural network, the processing unit is further configured to:
perform shielding processing on image information other than the target object in the second image, to obtain a second image obtained through shielding processing.

On the basis of the second aspect, in an optional implementation, that the movement feature, the N first images, and the M second images are input into the second neural network, to obtain the velocity of the target object includes:
inputting the M second images obtained through shielding processing, the movement feature, and the N first images into the second neural network, to obtain the velocity of the target object.

On the basis of the second aspect, in an optional implementation, the movement feature of the first object is N movement feature images with different timestamps, timestamps of the N shot images are the same as the timestamps of the N movement feature images, and a timestamp of each movement feature image corresponds to a timestamp of one shot image.

According to a third aspect, a computing device is provided, including a memory and a processor coupled to the memory. The memory is configured to store instructions, and the processor is configured to execute the instructions to implement the method in any one of the foregoing aspects.

According to a fourth aspect, a computer-readable storage medium is provided. The computer-readable storage medium stores a computer program. When the computer program is run on a processor, the method in the first aspect is implemented.

According to a fifth aspect, a computer program product or a computer program is provided. The computer program product or the computer program includes computer instructions, and when the computer instructions are run on a processor, the method in any one of the foregoing aspects is implemented.

### BRIEF DESCRIPTION OF DRAWINGS

To describe the technical solutions in embodiments of this application or in the conventional technology more clearly, the following briefly introduces the accompanying drawings used in describing embodiments or the conventional technology. Apparently, the accompanying drawings in the following descriptions show merely embodiments of this application, and a person of ordinary skill in the art may still derive other drawings from these accompanying drawings without creative efforts.
FIG. 1 is a diagram of a structure of an artificial intelligence main framework;
FIG. 2 is a schematic flowchart of a movement velocity measurement method according to this application;
FIG. 3 shows a visual evaluation result of a movement velocity measurement solution according to this application;
FIG. 4 shows another visual evaluation result of a movement velocity measurement solution according to this application;
FIG. 5 shows another visual evaluation result of a movement velocity measurement solution according to this application;
FIG. 6 is another schematic flowchart of a movement velocity measurement method according to this application;
FIG. 7 is a diagram of a structure of a velocity measurement apparatus according to an embodiment of this application; and
FIG. 8 is a diagram of a structure of a computing device according to an embodiment of this application.

### DESCRIPTION OF EMBODIMENTS

Embodiments of this application provide a movement velocity measurement method, a computing device, and a computer-readable storage medium, to improve accuracy of measuring a movement velocity of a target object.

The following describes embodiments of this application with reference to the accompanying drawings in embodiments of this application. Terms used in embodiments of this application are only used to explain specific embodiments of this application, but are not intended to limit this application. A person of ordinary skill in the art may learn that, with development of technologies and emergence of a new scenario, the technical solutions provided in embodiments of this application are also applicable to a similar technical problem.

In this application, at least one means one or more, and a plurality of means two or more. The term "and/or" describes an association relationship for describing associated objects and represents that three relationships may exist. For example, A and/or B may represent the following three cases: Only A exists, both A and B exist, and only B exists. A and B each may be singular or plural. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of this application described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, product, or device.

The following explains and describes some nouns or terms used in this application, and the nouns or terms are also used as a part of the present invention.

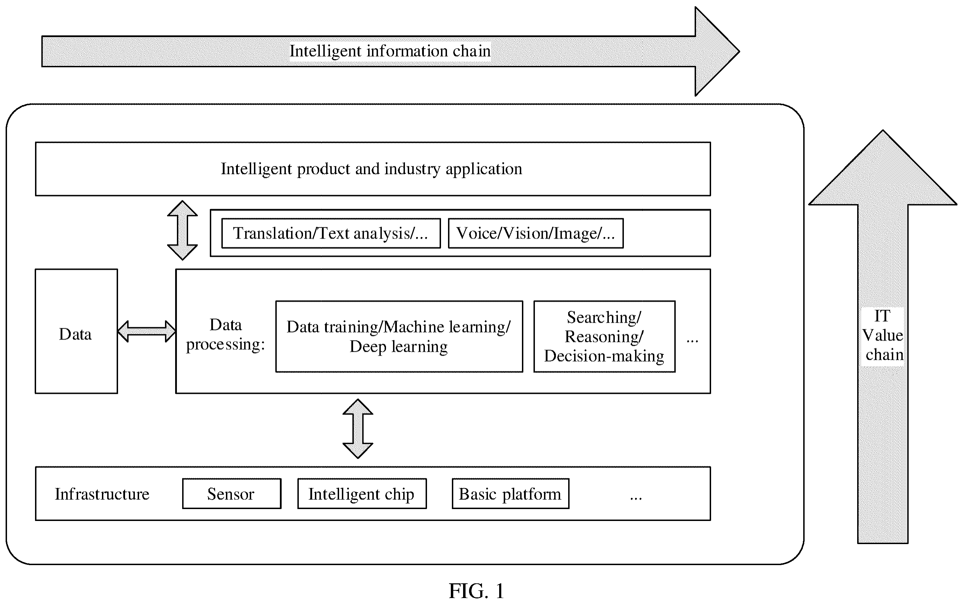

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support via a base platform. The infrastructure communicates with the outside by using a sensor. A computing capability is provided by a smart chip, for example, a hardware acceleration chip like a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable logic gate array (field programmable gate array, FPGA). The basic platform includes related platform assurance and support such as a distributed computing framework and a network, and may include cloud storage and computing, and interconnected networks. For example, the sensor communicates with the outside to obtain data, and the data is provided for an intelligent chip in a distributed computing system provided by the basic platform for computing.

### (2) Data

Data at an upper layer of the infrastructure indicates a data source in the field of artificial intelligence. The data relates to a graph, an image, a speech, and text, further relates to Internet of things data of a conventional device, and includes service data of an existing system and perception data like force, displacement, a liquid level, temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed based on formal information according to an inference control strategy. A typical function is searching and matching.

Decision-making is a process of making a decision after intelligent information is inferred, and usually provides functions such as classification, ranking, and prediction.

### (4) General capabilities

After data processing mentioned above is performed on the data, some general capabilities may be further formed based on a data processing result. For example, the general capabilities may be an algorithm or a general system, for example, translation, text analysis, computer vision processing, speech recognition, and image recognition.

### (5) Intelligent product and industry application

Intelligent products and industry applications are products and applications of artificial intelligence systems in various fields, and are encapsulation for an overall artificial intelligence solution, to productize intelligent information decision-making and implement applications. Application fields thereof mainly include an intelligent terminal, intelligent transportation, intelligent healthcare, autonomous driving, a smart city, and the like.

It should be understood that application scenarios of the movement velocity measurement method, the computing device, and the computer-readable storage medium provided in this application include but are not limited to the foregoing examples.

An autonomous driving task is used as an example. Velocity calculation of target objects including a vehicle, a pedestrian, and the like has always been a difficult problem of great concern. Accurate estimation of a velocity of a target object may assist in calculating a moving track of the target object, to predict a behavior intention of the target object in a future period of time, so that an autonomous driving vehicle can make a more appropriate driving decision, and plan more secure and more efficient vehicle movement behavior.

Existing solutions for measuring a velocity of a target object may be classified into a lidar-based method, a millimeter-wave radar-based method, a visual camera-based method, and the like based on sensor types. A movement velocity of the target object may be directly provided in only a solution of a millimeter-wave radar, but the solution needs to be fused with vision to determine a target category. A lidar can accurately determine a location of a target object within a specific distance, but cannot accurately determine a location of a key target at a short distance or low velocity. In addition, a disadvantage of the lidar is that costs are high, robustness is poor in a variable weather scenario, and a requirement for long-distance detection in an autonomous driving scenario is not met.

In a camera-based pure visual solution, to measure the velocity of the target object, the location of the target object is first measured, and then a lateral velocity, a longitudinal velocity, and a velocity included angle of the target object are obtained based on a distance change. For the location of the target object, a location of the target object in a world coordinate system may be obtained through regression via a neural network, or the location of the target object may be calculated by using a conventional geometric method.

However, when the location of the target object is measured by using a pure visual method, a specific deviation exists. Then, a velocity of the target object obtained through calculation based on the deviation location is less accurate, and it is difficult to meet an actual application requirement.

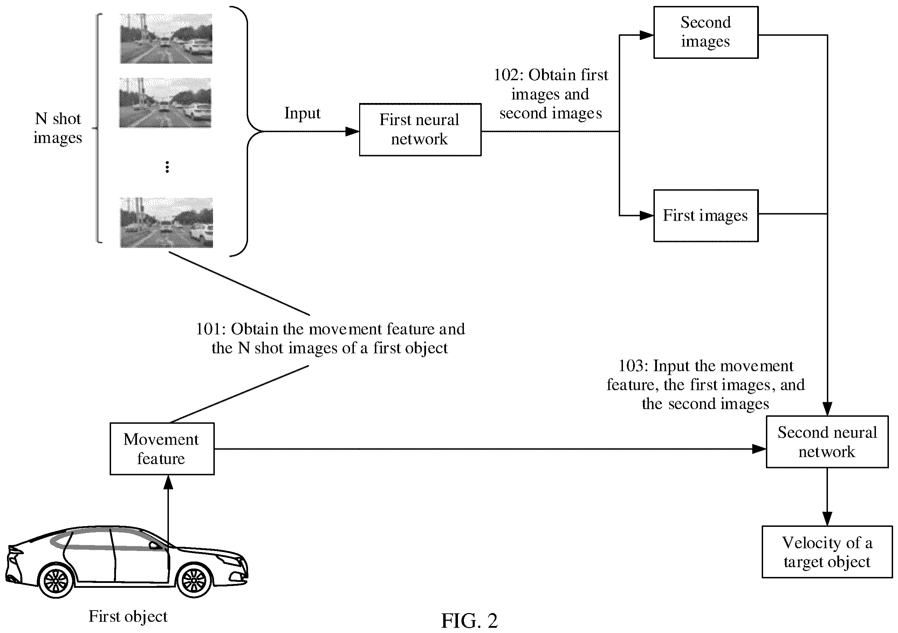

In view of this, this application provides a movement velocity measurement method, a computing device, and a computer-readable storage medium, to improve accuracy of measuring a movement velocity of a target object. Specifically, the movement velocity measurement method in this application is a camera-based pure visual solution. A movement velocity of a target object in an image shot by a first object is identified based on the image. The method may be performed by the first object, or may be performed by a component (for example, a processor, a chip, or a chip system) of the first object, or may be implemented by a logical node, a logical module, or software that can implement all or some terminal functions. FIG. 2 is a schematic flowchart of a movement velocity measurement method according to this application. As shown in FIG. 2, the movement velocity measurement method in this application includes the following steps.

101: Obtain a movement feature and N shot images of a first object.

The first object has a shooting function, and may shoot a scene within a shooting visual range of the first object, to obtain the N shot images, where N is an integer greater than 1. The N shot images are N consecutive frames of images shot by the first object. For example, N consecutive frames of images shot by the first object within a time period may be used as the N shot images in this application, or if the first object shoots a video within a time period, N consecutive frames of images included in the video may also be used as the N shot images in this application.

The first object in this application may be in a stationary state or a moving state, or may be switched between a stationary state and a moving state, and the N shot images are not limited to being shot by the first object in the stationary state or the moving state. The movement feature of the first object indicates a feature and a change of the moving state of the first object within the time period in which the first object shoots the N shot images. For example, the movement feature of the first object includes but is not limited to a pose, coordinates, a velocity, or the like of the first object.

Because the N shot images are N consecutive frames of images from different timestamps, for ease of subsequent processing, the movement feature of the first object may be first encoded into N movement feature images with different timestamps, timestamps of the N shot images are the same as the timestamps of the N movement feature images, and a timestamp of each movement feature image corresponds to a timestamp of one shot image. The movement feature of the first object obtained through encoding (namely, the N movement feature images) is used to perform step 103.

It should be understood that the "first object" is merely a general term for a device that performs the movement velocity measurement method and a velocity measurement function in this application, and does not specifically refer to one or some devices. In actual application, the device that performs the movement velocity measurement method and the velocity measurement function in this application may not be referred to as the "first object", and may be replaced with another name. This is not specifically limited herein. In embodiments of this application, only the "first object" is used as an example for description. For example, the first object may be a fixed-point velocity measurement meter, an uncrewed aerial vehicle having an image shooting function, or a vehicle having an image shooting function, or may be an entity in another form. This is not limited in this application. Specifically, when the first object is a vehicle, the first object may be specifically a vehicle to everything (vehicle to everything, V2X) device, for example, an intelligent car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), or a new energy vehicle (new energy vehicle).

102: Input the N shot images into a first neural network, to obtain N first images and M second images.

The N shot images are input into the first neural network, to obtain the N first images and the M second images. Each first image corresponds to a feature of one shot image, the M second images include a same target object, and M is an integer greater than 1 and less than or equal to N. In this application, shot images in which the same target object is shot need to be identified and screened out from the N shot images, to obtain the M second images. In other words, the M second images all are images in which the same target object is shot. Therefore, features of the target object in different frames of images may be learned based on the M second images.

In the image shooting visual range of the first object, there may be a plurality of target objects on which velocity measurement is to be performed. However, the movement velocity measurement method in this application is applicable to velocity measurement on one or more target objects at the same time. In a scenario in which velocities of a plurality of target objects are measured, for each target object, a second image in which the target object is shot needs to be obtained, and the second image of the target object is used for a subsequent velocity measurement procedure. For ease of description, in this application, an example in which only a velocity of one target object is measured is used for description.

In a possible implementation, the first neural network includes a second subnet. After the N shot images are input into the first neural network, feature extraction is first performed on the N shot images by using the second subnet, to obtain the N first images. Each first image corresponds to a feature of one shot image.

In a possible implementation, the first neural network includes a first subnet. After the N corresponding first images are generated based on the N shot images, the N first images are used as an input of the first subnet, and the first subnet identifies the N first images, to identify an object that is in each first image and on which velocity measurement is to be performed, so as to obtain the N identified images. In this case, in the obtained N identified images, a same target object is identified in M identified images, and the M identified images in which the same target object is identified are the M second images corresponding to the target object in this application. In other words, the M second images are identified images that are in the N identified images and in which the target object is identified.

In actual application, after the N identified images are obtained, Hungarian matching may be performed on the N identified images, to screen out the M identified images in which a same ID (namely, the same target object) is shot, namely, the M second images. Alternatively, the M second images in which the same target object is shot may be screened out or filtered out by using another method. This is not limited in this application.

103: Input the movement feature, the N first images, and the M second images into a second neural network, to obtain the velocity of the target object.

The movement feature, the N first images, and the M second images are input into the second neural network, to obtain the velocity of the target object.

In this application, a location and coordinate information of the target object no longer need to be inferred, and computing resource usage is low. This improves efficiency of a velocity measurement process. In addition, the velocity of the target object is directly obtained based on the images shot by the first object and the accurate movement feature of the first object. This improves accuracy of a velocity measurement result.

Further, when the movement feature, the N first images, and the M second images are input into the second neural network, shielding processing may be first performed on image information other than the target object in the second image, to obtain a second image obtained through shielding processing. This reduces interference of other redundant information (for example, a background street, a street lamp, or a building) in the second image, and improves the efficiency of the velocity measurement process and the accuracy of the velocity measurement result.

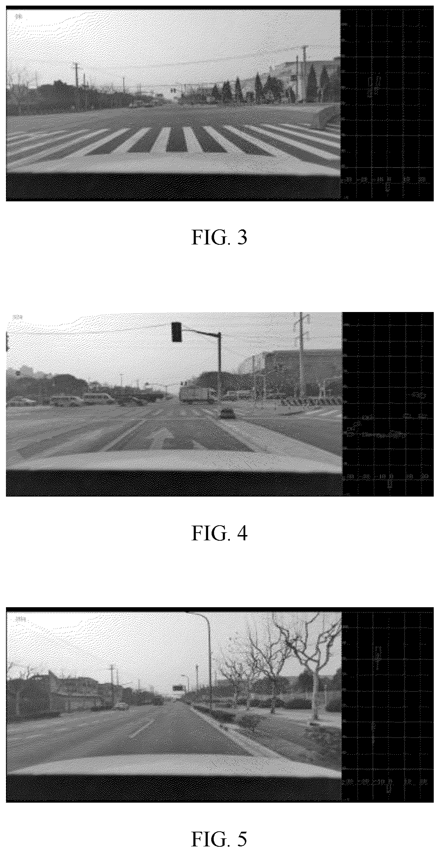

Visual evaluation is performed on the velocity measurement result of the movement velocity measurement solution in this application. For details, refer to visual evaluation results shown in FIG. 3, FIG. 4, and FIG. 5. In FIG. 3, FIG. 4, and FIG. 5, a rectangular box on the right indicates the velocity measurement result of the movement velocity measurement solution in this application, and an arrow on the rectangular box indicates a real tag value of the target object.

In addition, quantitative evaluation is further performed on the velocity measurement result of the movement velocity measurement solution in this application according to a three-sigma rule. Specifically, quantitative evaluation is shown as follows (x is a lateral velocity, z is a longitudinal velocity, and a unit is m/s):
abs velocity err 1sigma: x:1.3513, z:1.6791;
abs velocity err 2sigma: x:4.2324, z:6.7870; and
abs velocity err 3sigma: x:9.7436, z:16.1476.

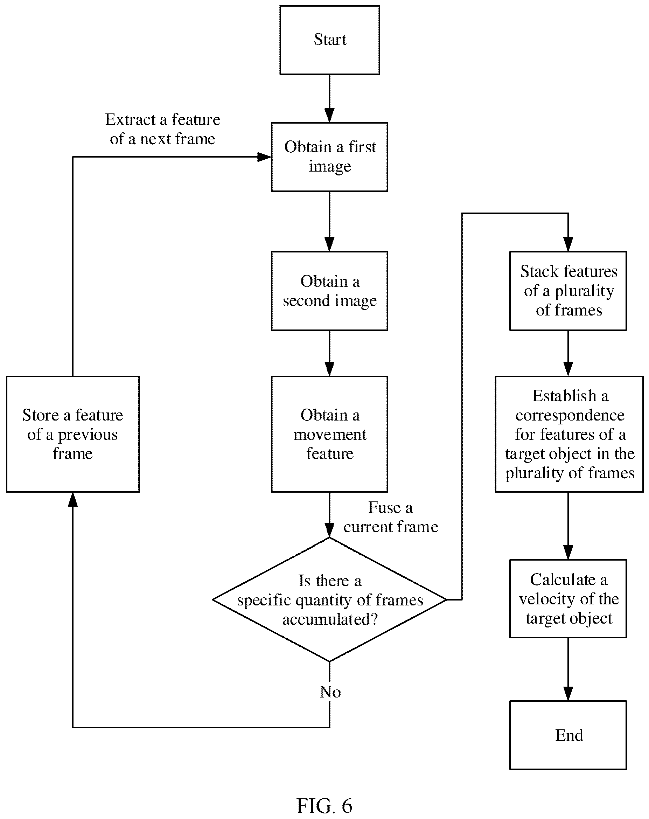

In actual application, the N shot images and the movement feature of the first object are collected in real time. Generally, more abundant information included in the collected shot images and movement feature indicates a more accurate velocity of the target object obtained through measurement. FIG. 6 is another schematic flowchart of a movement velocity measurement method according to this application. As shown in FIG. 6, an obtained first image, second image, and movement feature of a current frame may be fused in real time. For a specific fusion process, refer to the descriptions of step 103 in the embodiment corresponding to FIG. 2. Details are not described herein again. If a quantity of frames of a currently obtained fusion result of the first image, the second image, and the movement feature is small, and does not meet a preset frame quantity threshold, a fusion result of the current frame is first stored, and a first image, a second image, and a movement feature of a next frame continue to be fused. After a quantity of fused feature images meets a specific frame quantity, accumulated fusion results are stacked (that is, features of a plurality of frames are stacked). Then, the first subnet may identify a fusion result of each frame, and lock a target object in fusion results of a plurality of frame according to a Hungarian algorithm, and establish a correspondence, to obtain features of the same target object in the fusion results of the plurality of frames, so as to calculate a velocity of the target object.

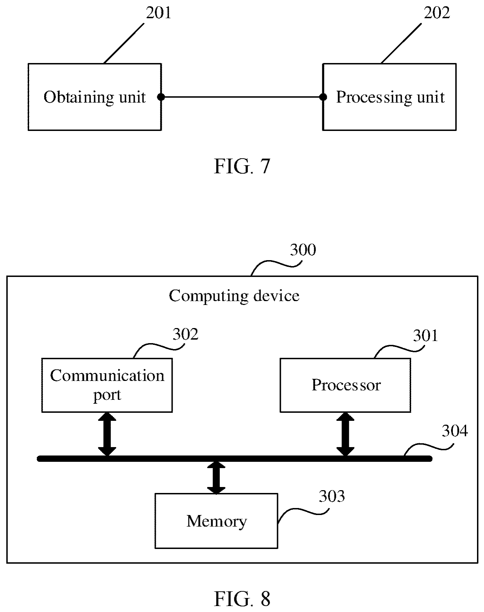

Next, to better implement the foregoing solutions in embodiments of this application, an embodiment of this application further provides related devices configured to implement the foregoing solutions. Specifically, refer to FIG. 7. FIG. 7 is a diagram of a structure of a velocity measurement apparatus according to an embodiment of this application. The velocity measurement apparatus is configured to perform the method performed by the first object in the embodiment shown in FIG. 2. As shown in FIG. 7, the velocity measurement apparatus includes:
an obtaining unit 201, configured to obtain a movement feature and N shot images of a first object, where the N shot images are N consecutive frames of images shot by the first object, and N is an integer greater than 1; and
a processing unit 202, configured to input the N shot images into a first neural network, to obtain N first images and M second images, where each first image corresponds to a feature of one shot image, the M second images include a same target object, and M is an integer greater than 1 and less than or equal to N.

The processing unit 202 is further configured to input the movement feature, the N first images, and the M second images into a second neural network, to obtain a velocity of the target object.

In a possible design, the first neural network includes a first subnet, the first subnet is configured to identify the N first images to obtain the N identified images, and the M second images are identified images that are in the N identified images and in which the target object is identified.

In a possible design, the first neural network further includes a second subnet, and the second subnet is configured to perform feature extraction on the N shot images to obtain the N first images.

In a possible design, before the movement feature, the N first images, and the M second images are input into the second neural network, the processing unit 202 is further configured to:
perform shielding processing on image information other than the target object in the second image, to obtain a second image obtained through shielding processing.

In a possible design, that the movement feature, the N first images, and the M second images are input into the second neural network, to obtain the velocity of the target object includes:
inputting the M second images obtained through shielding processing, the movement feature, and the N first images into the second neural network, to obtain the velocity of the target object.

In a possible design, the movement feature of the first object is N movement feature images with different timestamps, timestamps of the N shot images are the same as the timestamps of the N movement feature images, and a timestamp of each movement feature image corresponds to a timestamp of one shot image.

It should be noted that content such as information exchange between the modules/units in the velocity measurement apparatus and an execution process is based on a same concept as the method embodiment corresponding to FIG. 2 in embodiments of this application. For specific content, refer to the descriptions in the foregoing method embodiment shown in embodiments of this application. Details are not described herein.

FIG. 8 is a diagram of a structure of a computing device 300 according to an embodiment of this application. The computing device 300 may be specifically the velocity measurement apparatus in the embodiment shown in FIG. 7, and is configured to perform the method performed by the first object in the embodiment shown in FIG. 2. As shown in FIG. 8, FIG. 8 is a diagram of a possible logical structure of the computing device 300. The computing device 300 may include but is not limited to at least one processor 301 and a communication port 302.

Further, optionally, the apparatus may include at least one of a memory 303 and a bus 304. In this embodiment of this application, the at least one processor 301 is configured to perform control processing on an action of the computing device 300.

In addition, the processor 301 may be a central processing unit, a general-purpose processor, a digital signal processor, an application-specific integrated circuit, a field programmable gate array or another programmable logic device, a transistor logic device, a hardware component, or any combination thereof. The controller/processor may implement or execute various example logical blocks, modules, and circuits described with reference to content disclosed in embodiments of this application. Alternatively, the processor may be a combination of processors implementing a computing function, for example, a combination of one or more microprocessors, or a combination of the digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the computing device 300 shown in FIG. 8 may be specifically configured to: implement the steps implemented by the first object in the foregoing method embodiment, and implement the technical effect corresponding to the first object. For a specific implementation of the computing device shown in FIG. 8, refer to the descriptions in the foregoing method embodiment. Details are not described herein again.

An embodiment of this application further provides a computer program product including instructions. The computer program product may be a software or program product that includes instructions and that can run on a computing device or be stored in any usable medium. When the computer program product runs on at least one computer device, the at least one computer device is enabled to perform the method described in the embodiment shown in FIG. 2.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions indicate the computing device to perform the method described in the embodiment shown in FIG. 2.

The apparatus for training a neural network provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip performs the method described in the embodiment shown in FIG. 2. Optionally, the storage unit is a storage unit in the chip, for example, a register or a cache. Alternatively, the storage unit may be a storage unit in a wireless access device end but outside the chip, for example, a read-only memory (read-only memory, ROM), another type of static storage device that can store static information and instructions, or a random access memory (random access memory, RAM).

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented through corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented through software, hardware, firmware, or any combination thereof. When software is used to implement embodiments, all or some of embodiments may be implemented in a form of computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A movement velocity measurement method, wherein the method comprises:
obtaining a movement feature and N shot images of a first object, wherein the N shot images are N consecutive frames of images shot by the first object, and N is an integer greater than 1;
inputting the N shot images into a first neural network, to obtain N first images and M second images, wherein each first image corresponds to a feature of one shot image, the M second images comprise a same target object, and M is an integer greater than 1 and less than or equal to N; and
inputting the movement feature, the N first images, and the M second images into a second neural network, to obtain a velocity of the target object.

2. The method according to claim 1, wherein the first neural network comprises a first subnet, the first subnet is configured to identify the N first images to obtain the N identified images, and the M second images are identified images that are in the N identified images and in which the target object is identified.

3. The method according to claim 2, wherein the first neural network further comprises a second subnet, and the second subnet is configured to perform feature extraction on the N shot images to obtain the N first images.

4. The method according to any one of claims 1 to 3, wherein before the inputting the movement feature, the N first images, and the M second images into a second neural network, the method further comprises:
performing shielding processing on image information other than the target object in the second image, to obtain a second image obtained through shielding processing.

5. The method according to claim 4, wherein the inputting the movement feature, the N first images, and the M second images into a second neural network, to obtain a velocity of the target object comprises:
inputting the M second images obtained through shielding processing, the movement feature, and the N first images into the second neural network, to obtain the velocity of the target object.

6. The method according to any one of claims 1 to 5, wherein the movement feature of the first object is N movement feature images with different timestamps, timestamps of the N shot images are the same as the timestamps of the N movement feature images, and a timestamp of each movement feature image corresponds to a timestamp of one shot image.

7. A velocity measurement apparatus, wherein the velocity measurement apparatus comprises:
an obtaining unit, configured to obtain a movement feature and N shot images of a first object, wherein the N shot images are N consecutive frames of images shot by the first object, and N is an integer greater than 1; and
a processing unit, configured to input the N shot images into a first neural network, to obtain N first images and M second images, wherein each first image corresponds to a feature of one shot image, the M second images comprise a same target object, and M is an integer greater than 1 and less than or equal to N, wherein
the processing unit is further configured to input the movement feature, the N first images, and the M second images into a second neural network, to obtain a velocity of the target object.

8. The velocity measurement apparatus according to claim 7, wherein the first neural network comprises a first subnet, the first subnet is configured to identify the N first images to obtain the N identified images, and the M second images are identified images that are in the N identified images and in which the target object is identified.

9. The velocity measurement apparatus according to claim 8, wherein the first neural network further comprises a second subnet, and the second subnet is configured to perform feature extraction on the N shot images to obtain the N first images.

10. The velocity measurement apparatus according to any one of claims 7 to 9, wherein before the movement feature, the N first images, and the M second images are input into the second neural network, the processing unit is further configured to:
perform shielding processing on image information other than the target object in the second image, to obtain a second image obtained through shielding processing.

11. The velocity measurement apparatus according to claim 10, wherein that the movement feature, the N first images, and the M second images are input into the second neural network, to obtain the velocity of the target object comprises:
inputting the M second images obtained through shielding processing, the movement feature, and the N first images into the second neural network, to obtain the velocity of the target object.

12. The velocity measurement apparatus according to any one of claims 7 to 11, wherein the movement feature of the first object is N movement feature images with different timestamps, timestamps of the N shot images are the same as the timestamps of the N movement feature images, and a timestamp of each movement feature image corresponds to a timestamp of one shot image.

13. A computing device, comprising a processor, wherein the processor is coupled to a memory, wherein
the memory is configured to store instructions; and
the processor is configured to execute the instructions in the memory, so that the computing device performs the method according to any one of claims 1 to 6.

14. A computer-readable storage medium, wherein the computer-readable storage medium stores a computer program, and when the computer program is executed by a processor, the method according to any one of claims 1 to 6 is implemented.

15. A computer program product, wherein the computer program product stores computer-readable instructions, and when the computer-readable instructions are executed by a processor, the method according to any one of claims 1 to 6 is implemented.
